# EUROPÄISCHE PATENTSCHRIFT

(11) **EP 0 991 731 B1**
(45) Veröffentlichungstag und Bekanntmachung des Hinweises auf die Patenterteilung: **11.12.2002**
(21) Anmeldenummer: 98933591.4
(22) Anmeldetag: 04.06.1998
(51) Int. Cl.: C09J 177/00, C09J 177/06, C09J 7/00, C09J 5/06, C09J 177/12, B32B 7/12

(54) **TRENNSCHICHTFREIE, WICKELBARE EINSCHICHTIGE SCHMELZKLEBEFOLIE**
ROLLABLE, SINGLE-COATED HOT MELT ADHESIVE FILM WITH NO INTERLAYER
FILM ADHESIF FUSIBLE MONOCOUCHE ENROULABLE ET SANS SEPARATEUR

(30) Priorität: 17.06.1997 DE 19725538
(43) Veröffentlichungstag der Anmeldung: 12.04.2000
(73) Patentinhaber: Wolff Walsrode AG, 29655 Walsrode (DE)
(72) Erfinder: TEBBE, Heiko, D-29664 Walsrode (DE); SCHLEDJEWSKI, Ralf, D-29693 Hodenhagen (DE); SCHULTZE, Dirk, D-40221 Düsseldorf (DE)
(74) Vertreter: Pettrich, Klaus-Günter, Dr.
(86) Internationale Anmeldenummer: EP9803344
(87) Internationale Veröffentlichungsnummer: WO98058036

(56) Entgegenhaltungen:
- EP-A- 0 164 910
- EP-A- 0 204 528
- DE-A- 4 234 305
- GB-A- 1 055 610

## Beschreibung

Diese Erfindung betrifft eine einschichtige thermoplastische Schmelzklebefolie aus thermoplastischen Copolyamiden und/oder Copolyestern, die durch Zugabe von Additiven so modifiziert wird, dass sie ohne zusätzliche Trennschicht herstellbar ist, nicht auf dem Wickel verblockt und trotzdem ihre Warmklebrigkeit als notwendige Eigenschaft für ihre erfindungsgemäße Anwendung, wie das flächige Fixieren oder Verbinden anderer Substrate, erhalten bleibt.

Kunststoff-Folien sind in vielen Variationen und Anwendungen bekannt. Eine besondere Ausführungsform sind die Schmelzklebe- oder Hotmeltfolien, unter denen man Folien aus thermoplastischen Kunststoffen versteht, die im geschmolzenen Zustand infolge ihrer dann vorhandenen Oberflächenklebrigkeit und Fließfähigkeit sowie ihrer Dicke geeignet sind, andere Substrate zu verbinden. Die Eigenschaften und Vorteile von Schmelzklebefolien sowie Verfahren zu ihrer Herstellung aus gängigen Haftschmelzklebstoffgranulaten oder Pulvern sind beispielsweise in der US 4,379,117 oder DE 2 114 065 beschrieben. Der Einsatz von Schmelzklebefolien ist exemplarisch in der DE 3 911 613 erläutert. Eine allgemeine Kategorisierung von Klebstoffen lässt sich beispielsweise bei G. Habenicht; Kleben: Grundlagen, Technologie, Anwendungen, Springer Verlag, Berlin, 1986, nachlesen.

Die geringen Erweichungs- bzw. Schmelztemperaturen dieser Schmelzklebe- oder Hotmeltfolien führen dazu, dass die Folien auf dem Wickel verkleben. Weiterhin besitzen diese Materialien den Nachteil, dass sie sehr glatte Oberflächen aufweisen, die dadurch den Folien einen blockigen Charakter geben. Hierdurch sind Maschinengängigkeiten beeinträchtigt. Daher müssen die Folien permanent durch bewegliche Teile oder Trennmaterialbahnen geführt werden, um eine Verbindung mit stehenden Teilen und damit die Unterbrechung des Prozesses zu verhindern.

Stand der Technik, um solche blockige Materialen zu einschichtigen Bahnen zu verarbeiten, ist der Einsatz von Trennschichten wie sie beispielsweise in der DE 2 114 065 erwähnt sind. Trennschichten bestehen beispielsweise aus Geweben, Folien oder silikonisierten Papieren.

Der Nachteil von Trennschichten liegt darin, dass sie eine eigene Herstellung bedingen, die zu einer Verteuerung der angebotenen Schmelzklebefolien führen. Zudem sind sie meist unerwünscht, da die Trennschichten separat abgewickelt und vielfach entsorgt werden müssen. Da sich diese Trennschichten nie vollständig recyclieren lassen, stellen sie damit sowohl eine finanzielle als auch ökologische Belastung dar.

Alternativ zur Verwendung von Trennschichten ist das Ausrüsten von klebrigen oder blockigen Materialien mit Gleit- oder Antiblockmitteln, wie sie beispielsweise von Botz im Taschenbuch der Kunststoff-Additive, Gächter, Müller (Hrsg.), 2. Ausgabe, Hanser Verlag, München, 1983, S. 229-274, beschrieben, derart bekannt, dass ein Verblocken auf dem Wickel verhindert und ein Gleiten auf der Maschine erreicht wird. Durch die Verwendung solcher Materialien werden die adhäsiven Eigenschaften der Folie modifiziert. Die bisher bekannten Systeme haben den Nachteil, dass sie durch die Belegung der Oberflächen die Kleb- oder Siegelfähigkeit und -festigkeit derart verändern, dass sie auch durch eine Anpassung der Verarbeitungsparameter wie Druck, Temperatur und Zeit nicht das Ausgangsniveau des nicht ausgerüsteten Materials erreichen.

Die DE-A-4 234 305 beschreibt eine Schmelzklebefolie, die aus einem Polyesteramid, das sowohl ein Copolyester als auch ein Copolyamid ist, und Additiven besteht. Laut Römpp, Chemie-Lexikon, 9. Auflage (1990), Bd. 2, S. 1454 wird unter einem "Füllstoff" alles verstanden, was zur Erhöhung des Gewichtes bzw. Volumens des Kunststoffes verwendet wird. In derselben Literaturstelle, S. 1591 wird der Begriff "Gleitmittel" als Zusatzstoffe für gefüllte plastische Massen definiert. Aus Römpp Chemie-Lexikon, 9. Auflage (1989), S. 208 ist bekannt, Antiblockmittel zur Verhinderung bzw. Reduzierung der Adhäsion eines Materials zu sich selbst einzusetzen. Es findet sich in dieser Veröffentlichung aber kein Hinweis darauf, wie man bei Einsatz eines Antiblockmittels eine gute Schälfestigkeit einer einschichtigen Folie sicherstellt.

Allgemein verbreitet ist auch die Integration von klebrigen und blockigen Materialien in Mehrschichtaufbauten, bei denen sich die verschiedenen Schichten nur in der Wärme verbinden und in der Kälte nicht gegeneinander verblocken. So beschreiben die US 4 629 657, EP 0 424 761 oder EP 0 263 882 Polyolefinfolien, die mit heißklebefähigen Stoffen beschichtet sind. In diesem Fall übernimmt die weniger klebrige Schicht die Funktion der Trennschicht. Diese Folien weisen den Nachteil auf, dass sie nur eine heißklebefähige Seite besitzen, die erzielbare Verbundhaftung zudem gering ist und die Endprodukte eine nicht unerhebliche Rollneigung besitzen.

Es stellte sich daher die Aufgabe, eine einschichtige Folie mit hoher Klebkraft für Thermokaschierung, -versiegelung und -fixierung bereitzustellen, die sich ohne zu verkleben auf- und abwickeln und blockarm über gängige Verarbeitungsmaschinen führen lässt.

Erfindungsgemäß gelang es, eine den genannten Anforderungen genügende einschichtige trennschichtfreie Schmelzklebefolie aus Copolyestern und/oder Copolyamiden bereitzustellen, die dadurch gekennzeichnet ist, dass sie sich ohne zusätzliche Verwendung einer Trennschicht ohne zu verkleben auf- und abwickeln lässt und die Polymermatrix aus Copolyamid und/oder Copolyester eine Additivkombination aus 0,4 Gew.-% bis 8,0 Gew.-% eines Abstandshalters und 0,05 Gew.-% bis 1,0 Gew.-% eines Trenn- und Gleitmittels, sowie gegebenenfalls weitere Zusatzmittel bis zu 1 Gew.-%, immer bezogen auf die Gesamtmischung, enthält.

In einer bevorzugten Ausführungsform wird eine Additivkombination eingesetzt, die dadurch gekennzeichnet ist, dass sie 0,4 Gew.-% bis 8,0 Gew.-% einer Kieselsäure und 0,05 Gew.-% bis 1,0 Gew.-% eines langkettigen und/oder cyclischen Fettsäureamides enthält.

In einer besonders bevorzugten Ausführungsform wird eine Additivkombination eingesetzt, die dadurch gekennzeichnet ist, dass sie zusätzlich zu dem angeführten langkettigen und/oder cyclischen Fettsäureamid 0,02 Gew.-% bis 0,4 Gew.-% einer Seife als Trenn- und Gleitmittel enthält.

In einer bevorzugten Ausführungsform werden die Additive mittels eines Masterbatches in die Polymermatrix aus Copolyestern und/oder Copolyamiden eingearbeitet, dadurch gekennzeichnet, dass das Additivbatch aus 35 Gew.-% bis 80 Gew.-% Copoplyester und/oder Copolyamid, 20 Gew.-% bis 50 Gew.-% Kieselsäure, 2 Gew.-% bis 10 Gew.-% langkettigen und/oder cyclischen Fettsäureamid und 0,5 Gew.-% bis 5 Gew.-% Seife aufgebaut ist.

Als Ausgangsmaterialien für die Polymermatrix sind die entsprechenden gängigen thermoplastischen Haftschmelzklebstoffe der am Markt bekannten Anbieter geeignet, die beispielsweise unter den Handelsnamen Dynapol®, Vestamelt®, Platamid®, Bostik® und Griltex® angeboten werden. Die erfindungsgemäß eingesetzten Schmelzkleberohstoffe sind vorzugsweise thermoplastische Copolyamide und/oder Copolyester.

Die Viskosität der Polymermatrixmaterialien wird üblicherweise durch den Schmelzflussindex (MFI) und der Schmelzviskosität gekennzeichnet. Die Schmelzflussindices für die Polymermatrixkomponente liegen bevorzugterweise zwischen 1,5 g/10 min und 150 g/10 min, gemessen nach DIN 5 37 35 bei 160°C und einer Prüfmasse von 2,16 kg. Die Schmelzviskositäten der Polymermatrixmaterialien liegen bevorzugterweise zwischen 400 Pa·s und 1000 Pa·s gemessen nach ISO 1133 bei einer Temperatur von 160°C.

Weiterhin werden Schmelzkleberohstoffe bevorzugt, deren thermoanalytisch bestimmter maximaler Hauptschmelzpunkt zwischen 80°C und 130°C liegt.

Als Abstandshalter sind natürliche Kieselsäuren, synthetische Kieselsäuren und polymere Abstandshalter geeignet. Vorzugsweise werden natürliche Kieselsäuren verwendet. Als Trenn- und Gleitmittel sind Fette, Wachse und Seifen geeignet. Vorzugsweise werden langkettige und/oder cyclische Fettsäureamide verwendet, deren aliphatischen Reste vorzugsweise eine Kohlenstoffkettenlänge von 14 bis 20 C-Atomen besitzen. Für die dritte Additivkomponente sind Seifen mit einer Kettenlänge von 12 bis 20 C-Atomen geeignet. Diese Seifen liegen in einer bevorzugten Form als Calciumsalz vor.

Durch den Einsatz der erfindungsgemäßen Additivkombination gelingt es, einschichtige Schmelzklebefolien nicht nur mit einer guten Maschinengängigkeit herzustellen, sondern auch auf die sonst üblichen Trennschichten zu verzichten, die bekanntlich die Herstellungskosten der Folien nicht unerheblich verteuern. Für den einschlägig vorgebildeten Fachmann nicht naheliegned war, dass die erfindungsgemäßen Antiblock/Trennmittelkombinationen die Verklebungseigenschaften der erfindungsgemäßen Mischungen/Folienrezepturen nicht nachhaltig negativ beeinflussen.

Zur Herstellung der erfindungsgemäßen Schmelzklebefolie eignen sich die gängigen thermischen Umformverfahren zur Verarbeitung von Kunststoffen. Insbesondere die Schmelzextrusion eignet sich zur Einarbeitung und Vermischung der Additive in die Polymermatrix. Die Einarbeitung der Additive kann hierbei als Compoundierung aller Komponenten oder in einer bevorzugten Form über die Zugabe eines Masterbatches beim Herstellungsprozess erfolgen.

Die erfindungsgemäßen Folien lassen sich nach dem Flachfolien- oder nach dem Blasfolienverfahren herstellen. In einer bevorzugten Ausführung werden die Folien nach dem Blasfolienverfahren hergestellt. Das Blasfolienverfahren ermöglicht durch unterschiedliche Aufblasverhältnisse eine flexible Anpassung der Liegebreite an die Erfordernisse des Marktes.

Der für das Blasfolienverfahren notwendige Aufschluss der thermoplastischen Haftschmelzklebestoffe kann mit Hilfe geeigneter Schneckenwerkzeuge, wie sie z.B. von Wortberg, Mahlke und Effen in: Kunststoffe, 84 (1994) 1131-1138, beschrieben sind, durchgeführt werden. Werkzeuge zum Ausformen der Schmelze zu Folien sind u.a. von Michaele in: Extrusions-Werkzeuge, Hanser Verlag, München 1991 dargestellt.

In einer bevorzugten Ausführung besitzen die erfindungsgemäßen Folien eine Gesamtschichtdicke zwischen 15 µm und 200 µm.

Die erfindungsgemäßen Folien lassen sich mit Hilfe der gängigen Oberflächenbehandlungsverfahren, bevorzugt sind Corona-, Flamm- und/oder Fluor-Behandlung, in ihren Oberflächeneigenschaften an zu verbindende Substrate anpassen. Verschiedene Verfahren zur Oberflächenmodifikation sind beispielsweise von Gerstenberg in: Coating 4/93, S. 119-122, beschrieben.

Gegenstand der Erfindung ist weiterhin ein Verfahren zur Herstellung von Verbunden aus beliebigen Substraten und einer erfindungsgemäßen Folie, dadurch gekennzeichnet, dass man die Folie mit mindestens einem Substrat unter Wärmeeinfluss und vorzugsweise nur geringem Druck zusammenbringt. In einer bevorzugten Ausführung wird die Folie zwischen zwei unterschiedliche Substrate gelegt und verbindet diese nach Zusammenführung und dem Einfluss von Druck und Wärme.

Bei den Substraten handelt es sich vorzugsweise um Bahnmaterialien oder Abschnitte davon. Solche Bahnmaterialien sind beispielsweise Webwaren, Vliese, Folien, Papiere, Pappen und Kartonagen. Sie bestehen aus Zellstoff oder zellstoffhaltigen Produkten, anderen pflanzlichen Produkten, Fasermaterialien, Kunststoffen oder auch Metallen.

Gegenstand der Erfindung sind ferner Folienab- oder -ausschnitte allgemein durch Stanzen oder Schneiden hergestellt und ihr Einsatz zum Fixieren und/oder Versiegeln von Materialien oder Gegenständen gegeneinander, dadurch gekennzeichnet, dass Ab- oder Ausschnitte der erfindungsgemäßen Folie zwischen zwei gleiche oder unterschiedliche Materialien oder Gegenstände gebracht werden und eine Verbindung in Form einer Versiegelung oder Fixierung unter Wärme und optional Druck stattfindet. Als dieserart zu verbindende Stoffe kommen bevorzugt Zellstoff oder zellstoffenthaltende Produkte, Hölzer, pflanzliche und tierische Fasermaterialien, Kunststoffe, Metalle und Gläser in Frage.

Die erfindungsgemäßen Verbunde und/oder Verbindungen sind thermoreversibel. Sie lassen sich somit nach dem Einsatz wieder zerlegen, so dass die verwendeten Materialien dem werkstofflichen Recycling zur Verfügung stehen.

### Beispiele:

### Beispiel A:

Nach dem Blasfolienverfahren wurde eine Folie hergestellt, die aus einem thermoplastischen Copolyester, aufgebaut aus den Komponenten Butandiol, Terephthalsäure und Isophthalsäure, mit einem MFI von 18 g/10 min, gemessen nach DIN 53 735 bei 160°C und einer Prüfbelastung von 2,16 kg, gebildet wird. Der thermoanalytisch bestimmte Schmelzpunkt des Copolyesters betrug 125-130°C. Dieser Polymermatrix wurden 10 Gew.-% eines Antiblockbatches zugesetzt, welches aus 53 Gew.-% Copolyester, aufgebaut aus den Komponenten Butandiol, Terephthalsäure und Isophthalsäure, 40 Gew.-% Kieselsäure, 5 Gew.-% langkettigem Fettsäureamid und 2 Gew.-% Calziumstearat besteht. Sämtliche Komponenten wurden gemeinsam in einem Extruder mittels einer Dreizonenschnecke plastifiziert. Aus der Schmelze wurde mit Hilfe eines Blasfolienwerkzeuges eine Schlauchfolie geformt. Durch Anblasen mit Luft wurde die ringförmige Schmelzefahne abgekühlt, anschließend flachgelegt und im Randbereich geschnitten, so dass zwei Folienbahnen getrennt werden konnten. Diese wurden auf separaten Wickeleinrichtungen aufgerollt. Die erhaltene Folie wies eine Dicke von 50 µm auf.

### Vergleichsbeispiel B:

Mit Hilfe eines Extruders wurde das in Beispiel A beschriebene thermoplastische Copolyester ohne die Zugabe weiterer Verarbeitungshilfen plastifiziert. Aus der Schmelze wurde mit Hilfe eines Blasfolienwerkzeuges eine Schlauchfolie geformt. Diese Schlauchfolie konnte anschließend nicht flachgelegt werden, da sie aufgrund der hohen Klebrigkeit nicht maschinengängig war.

### Vergleichsbeispiel C:

Mit Hilfe eines Zweischicht-Blasfolienwerkzeuges wurde eine Folie hergestellt, deren erste Schicht aus thermoplastischen Copolyester, wie im Vergleichsbeispiel B beschrieben, gebildet wurde. Das eingesetzte Material wurde mit einem Extruder aufgeschmolzen.

Die zweite Schicht wurde aus einem LD-Polyethylen mit einer Dichte von 0,9 g/cm³ und einem MFI von 2 g/10 min, gemessen nach DIN 53 735 bei 160°C und einer Prüfbelastung von 2,16 kg, gebildet. Plastifiziert wurde dies Material in einem zweiten Extruder.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt und im Randbereich geschnitten, so dass zwei Folienbahnen getrennt werden konnten. Diese wurden auf separaten Wickeleinrichtungen aufgerollt. Die Dicke der einzelnen Schichten betrug jeweils 50 µm. An der Copolyester-basierenden Schicht wurden die Vergleichseigenschaften abgeprüft, die Polyethylen-basierende Schicht wurde zuvor abgezogen.

Prüfungen an dem im Rahmen der Beispiele und Vergleichsbeispiele hergestellten Mustern:

### Abwickelverhalten

Das Abwickelverhalten wurde an einer in eine Abwickeleinrichtung eingespannten Folienrolle durch manuelles Abrollen bestimmt.

### Erweichungsbereich

Den angegebenen Werten für den Erweichungsbereich auf der Kofler-Heizbank liegt die im folgenden beschriebene Hausmethode zugrunde. Auf eine Kofler-Heizbank werden (Folien-)Stücke des zu untersuchenden Kunststoffes mit einer Grundfläche von mindestens 1 mm² gelegt. Nachdem diese Stücke mindestens 60 s auf der Kofler-Heizbank gelegen haben, wird mit einem Skalpell festgestellt, bei welcher Position der Heizbank sich die Kunststoff-Teststücke ohne Einwirkung einer großen Kraft von der Seite her plastisch verformen lassen. Die Position auf der Kofler-Heizbank wird dann mit der Temperatur korreliert. Die an verschiedenen Teststücken ermittelten Maximal- und Minimal-Werte geben das obere und untere Ende des Erweichungsbereiches an.

### Schälkraft

Zur Bestimmung der Schälkraft wurden 4 cm breite und mindestens 5 cm lange Muster aus den Folien der Beispiele geschnitten. Diese Muster wurden so zwischen zwei Textilien aus Baumwolle gelegt, dass jeweils einseitig ein 5 cm langer Rand aus Textil übersteht. Anschließend werden mittels einer Laborpresse bei einem Druck von 220 g/cm², einer Temperatur von 170°C und einer Belastungsdauer von 20 s bis 200 s Textil und Folie miteinander verklebt. Eine überstehende Textilschicht wird dann in eine Halterung eingespannt, die mit einer Federwaage verbunden ist. An der anderen überstehenden Textilschicht wird solange gezogen bis der verklebte Abschnitt des Laminates aufreißt. Die hierfür benötigte Kraft entspricht der Schälkraft und wird an der Federwaage abgelesen. Die abhängig von der Belastungsdauer höchste Schälkraft wurde zum Vergleich herangezogen.

Die in der nachfolgenden Tabelle wiedergegebenen, die Folien hinsichtlich der erfindungsgemäßen Eigenschaften charakterisierenden Daten zeigen deutlich, dass die in dem Beispiel beschriebene erfindungsgemäße Folie den im Rahmen der Vergleichsbeispiele dargestellten Folien bezüglich der Herstellung deutlich im Vorteil ist und gleichzeitig vergleichbare Verklebungseigenschaften aufweist.

**Tabelle 1:**

| Eigenschaften der im Rahmen der Beispiele und Vergleichsbeispiele hergestellten Folien | | | | | |
|---|---|---|---|---|---|
| Eigenschaft | Bestimmungsmethode | Einheit | Beispiel A | Vergleichsbeispiel B | Vergleichsbeispiel C |
| mit Trennschicht hergestellt | ./. | ./. | nein | nein | ja |
| Abwickelbarkeit | ./. | ./. | ja | nein | ja |
| Erweichungsbereich | Koflerbank/ Hausmethode | °C | 104-105 | ./. | 103-106 |
| Schälkraft | Hausmethode | N | 49 | ./. | 50*) |

| | | | | | |
|---|---|---|---|---|---|
| *) nach Abtrennung der PE-Trennschicht | | | | | |

## Patentansprüche

1. Trennschichtfreie, einschichtige, thermoplastische Schmelzklebefolie, **dadurch gekennzeichnet, dass** sie sich ohne zusätzliche Verwendung einer Trennschicht auf- und abwickeln lässt und die Polymermatrix aus Copolyamiden und/oder Copolyestern eine Additivkombination aus 0,4 Gew.-% bis 8,0 Gew.-% Abstandshalter und 0,05 Gew.-% bis 1,0 Gew.-% Trenn- und Gleitmittel, sowie gegebenenfalls weitere Zusatzmittel bis zu 1 Gew.-%, immer bezogen auf die Gesamtmischung, enthält.

2. Folie nach Anspruch 1, **dadurch gekennzeichnet, dass** als Abstandshalter eine Kieselsäure und als Trenn- und Gleitmittel ein langkettiges und/oder cyclisches Fettsäureamid verwendet wird.

3. Folie nach wenigstens einem der vorangegangenen Ansprüche, **dadurch gekennzeichnet, dass** zusätzlich 0,02 Gew.-% bis 0,4 Gew.-% einer Seife zugemischt wird.

4. Folie nach wenigstens einem der vorangegangenen Ansprüche, **dadurch gekennzeichnet, dass** die Additivkombination mittels eines Mastebatches bestehend aus 35 Gew.-% bis 80 Gew.-% Copolyester und/oder Copolyamid, 20 Gew.%-50 Gew.-% Kieselsäure, 2 Gew.-% bis 10 Gew.-% langkettiges und/oder cyclisches Fettsäureamid und 0,5 Gew.-% bis 5 Gew.-% Seife in die Polymermatrix aus Copolyestern und/oder Copolyamiden eingebracht wird.

5. Folie nach wenigstens einem der vorangegangenen Ansprüche, **dadurch gekennzeichnet, dass** die Folie nach dem Flach- oder Blasfolienverfahren hergestellt wird.

6. Folie nach wenigstens einem der vorangegangenen Ansprüche, **dadurch gekennzeichnet, dass** sie einseitig oder beidseitig einem der bekannten Verfahren zur Oberflächenbehandlung ausgesetzt wird.

7. Verwendung von Folie nach wenigstens einem der vorangegangenen Ansprüche, zur Herstellung von Verbunden und/oder Laminaten aus gleichartigen oder unterschiedlichen Substraten.

8. Verwendung von Folie nach wenigstens einem der Ansprüche 1-6, **dadurch gekennzeichnet, dass** die Folie zum Fixieren gleichartiger oder unterschiedlicher Substrate gegeneinander eingesetzt wird.

9. Verfahren zur Herstellung von Verbunden aus beliebigen Substraten und einer Folie, **dadurch gekennzeichnet, dass** man die Substrate und eine Folie gemäß Anspruch 1 bis 6 unter Wärme- und Druckeinwirkung zusammenführt, wobei die Folie zwischen den Substraten liegt.

10. Verfahren nach Anspruch 9, **dadurch gekennzeichnet, dass** als Substrate Papiere, Pappen, Kunststoffe, Metalle, Hölzer, Gläser, Stoffe, Gewebe, Vliese, pflanzliche Produkte oder Netze Anwendung finden.

## Claims

1. Single-layer hot-melt-adhesive thermoplastic film with no release layer, **characterized in that** it requires no additional use of a release layer when being wound up or unwound, and **in that** the polymer matrix made from copolyamides and/or from copolyesters comprises an additive combination of from 0.4% by weight to 8.0% by weight of spacers and from 0.05% by weight to 1.0% by weight of release agents and lubricants, and also, where appropriate, other added materials up to 1% by weight, always based on the entire mixture.

2. Film according to Claim 1, **characterized in that** the spacer used comprises a silica and the release agent and lubricant used comprises a long-chain and/or cyclic fatty amide.

3. Film according to at least one of the preceding claims, **characterized in that** from 0.02% by weight to 0.4% by weight of a soap is also admixed.

4. Film according to at least one of the preceding claims, **characterized in that** the additive combination is introduced into the polymer matrix made from copolyesters and/or from copolyamides by means of a masterbatch composed of from 35% by weight to 80% by weight of copolyester and/or copolyamide, from 20% by weight to 50% by weight of silica, from 2% by weight to 10% by weight of long-chain and/or cyclic fatty amide and from 0.5% by weight to 5% by weight of soap.

5. Film according to at least one of the preceding claims, **characterized in that** the film is produced by the flat-film or blown-film process.

6. Film according to one of the preceding claims, **characterized in that** one or both of its sides is/are subjected to one of the known processes for surface treatment.

7. Use of film according to at least one of the preceding claims, to produce composites and/or laminates made from similar or differing substrates.

8. Use of film according to at least one of Claims 1 to 6, **characterized in that** the film is used for securing similar or differing substrates to one another.

9. Process for producing composites from any desired substrates and from a film, **characterized in that** the substrates and a film according to any of Claims 1 to 6 are brought together with exposure to heat and pressure, the film lying between the substrates.

10. Process according to Claim 9, **characterized in that** the substrates used comprise papers, cardboard, plastics, metals, wood, glass, materials, fabrics, nonwovens, vegetable products, or nets.

## Revendications

1. Film adhésif fusible thermoplastique monocouche, sans séparateur, **caractérisé en ce qu'**il peut être enroulé et déroulé sans utilisation supplémentaire d'une couche de séparation et que la matrice polymère constituée de copolyamides et/ou copolyesters, contient une combinaison d'additifs constituée de 0,4% en poids à 0,8% en poids d'un écarteur et 0,05% en poids à 1,0% en poids d'un agent de séparation et lubrifiant interne, ainsi que le cas échéant, d'autres additifs, jusqu'à 1% en poids, toujours sur base du mélange total.

2. Film suivant la revendication 1, **caractérisé en ce que** comme écarteur, on utilise un acide silicique et comme agent de séparation et lubrifiant interne, un amide d'acides gras à longue chaine et/ou cyclique.

3. Film suivant au moins l'une quelconque des revendications précédentes, **caractérisé en ce que** l'on mélange en outre, 0,02% en poids à 0,4% en poids d'un savon.

4. Film suivant au moins l'une quelconque des revendications précédentes, **caractérisé en ce que** la combinaison d'additifs est introduite dans la matrice polymère constituée de copolyamides et/ou copolyesters, à l'aide d'un mélange maître consistant en 35% en poids à 80% en poids d'un copolyester et/ou copolyamide, 20% en poids à 50% en poids d'acide silicique, 2% en poids à 10% en poids d'amide d'acides gras à longue chaine et/ou cyclique et 0,5% en poids à 5% en poids de savon.

5. Film suivant au moins l'une quelconque des revendications précédentes, **caractérisé en ce que** le film est préparé par un procédé à plat ou par soufflage.

6. Film suivant au moins l'une quelconque des revendications précédentes, **caractérisé en ce qu'**il est soumis, sur une face ou sur les deux faces, à l'un des procédés connus pour le traitement de surface.

7. Utilisation d'un film suivant au moins l'une quelconque des revendications précédentes, pour la préparation de composites et/ou stratifiés de substrats similaires ou différents.

8. Utilisation d'un film suivant au moins l'une quelconque des revendications 1 à 6, **caractérisée en ce que** le film est mis en oeuvre pour fixer l'un contre l'autre, des substrats similaires ou différents.

9. Procédé de préparation de composites de substrats quelconques avec un film, **caractérisé en ce que** l'on assemble les substrats et un film suivant les revendications 1 à 6, sous l'action de chaleur et de pression, le film se trouvant entre les substrats.

10. Procédé suivant la revendication 9, **caractérisé en ce que** comme substrat, du papier, du carton, une matière plastique, un métal, du bois, du verre, des étoffes, des tissus, des voiles, des produits végétaux ou des filets trouvent utilisation.
